Europäisches Patentamt

European Patent Office

Office européen des brevets

(11) Veröffentlichungsnummer: **0 290 713**
**A2**

# (12) EUROPÄISCHE PATENTANMELDUNG

(21) Anmeldenummer: **88100018.6**

(22) Anmeldetag: **04.01.88**

(51) Int. Cl.4: **A01K 89/00**

(30) Priorität: **08.01.87 DE 3700390**

(43) Veröffentlichungstag der Anmeldung:
**17.11.88 Patentblatt 88/46**

(84) Benannte Vertragsstaaten:
**FR GB NL**

(71) Anmelder: **Sodatronik GmbH**
**Andechser Strasse 15**
**D-8138 Erling-Andechs(DE)**

(72) Erfinder: **Sooth, Jürgen**
**Alpspitzstrasse 8**
**D-8031 Eichenau(DE)**

(54) **Schnurspule für Angelrollen mit elektronischer Bissanzeiger.**

(57) Schnurspule für Angelrollen mit elektronischem Bißanzeiger, bei der die Bewegung der Angelschnur in beliebiger axialer Richtung eine Sensorscheibe in Rotation versetzt. Durch die Rotationsbewegung wird ein elektronischer Sensor (z.b. Lichtschranke, Read-Kontakt) aktiviert und der Alarm ausgelöst.
Die Sensorscheibe kann mit Hilfe einer Feder vorgespannt werden, sodaß nicht nur beim Abziehen der Schnur sondern auch bei entgegenkommender Schnur die Rotation der Sensorscheibe ausgelöst wird.

Fig. 1

EP 0 290 713 A2

## Schnurspule für Angelrollen mit elektronischer Anzeigevorrichtung

Die Erfindung bezieht sich auf eine Schnurspule für Angelrollen, die mit einer elektronischen Signalisiereinrichtung ausgestattet ist, welche die Bewegung der Angelschnur in beiden axialen Richtungen optisch und akustisch anzeigt, wobei die Schnurspule zur Alarmauslösung nicht in eine Rotationsbewegung versetzt werden muß. Die Intensität des Alarms ist dabei abhängig von der Laufgeschwindigkeit der Angelschnur in beiden axialen Richtungen.

Es sind bereits Anzeigevorrichtungen bekannt, welche die Rotation der Schnurrolle anzeigen, bzw. melden (G 81 31 266.0; P 35 34710.4).

Auch sind Anzeigevorrichtungen in Angelrollen bekannt, bei denen die Angelschnur in eine Klemmvorrichtung eingelegt wird und bei Überschreiten der vorgegebenen Klemmkraft die Alarmeinrichtung ausgelöst wird.

Alle diese bekannten Anzeigevorrichtungen weisen jedoch folgende entscheidende Nachteile auf:

1. Die Empfindlichkeit der Anzeige wird durch die vorgegebene Klemmkraft in einem Fall bzw. durch die erforderliche Überwindung der Massenträgheit der Schnurspule im anderen Fall stark beeinträchtigt.

2. Bewegt sich der Fisch beim oder nach dem Anbiß der Angelrolle entgegen, wird kein Alarm ausgelöst, da der zur Alarmauslösung erforderliche Zug an der Angelschnur ausbleibt.

Dies hat zur Folge, daß statistisch betrachtet, nur jeder 2. Biß angezeigt wird, da man davon ausgehen kann, daß bei jedem 2. Biß der Fisch sich nicht von der Angelrolle entfernt, sondern z.B. auf diese zuschwimmt.

Aufgabe der Erfindung ist es, eine Schnurspule mit einer integrierten Anzeigevorrichtung zu - schaffen, welche beim Ablaufen der Schnur über den vorderen Spulenflansch Alarm auslöst, ohne diese in Rotation zu bringen, und somit die Überwindung der Massenträgheit der Spule ausscheidet. Eine weitere Aufgabe der Erfindung ist es, auch dann Alarm auszulösen, wenn sich der Fisch beim Anbiß der Angelrolle entgegenbewegt, wobei dann keine Zugkraft an der Angelschnur vorhanden ist.

Erfindungsgemäß wird diese Aufgabe dadurch gelöst, daß die Angelschnur in die Öse einer Sensorscheibe, welche vor dem Spulenflansch drehbar gelagert ist, eingehängt wird und diese beim Abziehen der Schnur über den vorderen Spulenflansch in eine Drehbewegung versetzt. Diese Drehbewegung wird dann dazu benutzt, einen elektronischen Sensor beliebiger Art, z.B. Read Kontakt, Lichtschranke oder ähnliches zu aktivieren.

Mit der Drehbewegung der Sensorscheibe, hervorgerufen durch das Abziehen der Schnur, wird eine Feder vorgespannt, welche bewirkt, daß bei Entgegenkommen der Angelschnur die Sensorscheibe sich in entgegengesetzter Drehrichtung bewegt. Dabei ist die Öse der Sensorscheibe so angeordnet, daß bei Bewegungsrichtung der Schnur in Richtung Schnurspule, diese auf die Spule wieder aufgewickelt wird.

Weiterhin ist die Öse so ausgebildet, daß die Schnur beim Anhieb selbsttätig aus dieser herausschlüpfen kann und so den Angler beim Aufspulen der Schnur nicht behindert.

Zur Unterbringung der optischen und akustischen Warneinrichtungen (Lampe und Summer), sowie der Energiespeicher (Batterie) ist vorzugsweise die Sensorscheibe in ein Gehäuse mit einer Schutzkappe integriert und bildet mit diesem und der Schnurspule eine homogene Einheit.

Anhand der beigefügten Zeichnungen wird ein Ausführungsbeispiel einer erfindungsgemäßen Schnurspule beschrieben.

Fig 1 zeigt ausschnittweise eine Schnurspule im Längsschnitt,

Fig 2 die Innenansicht des Gehäuses mit Signaleinrichtung und Energiespeicher und Fig 3 die Ausbildung der Sensorscheibe als Flügelrad.

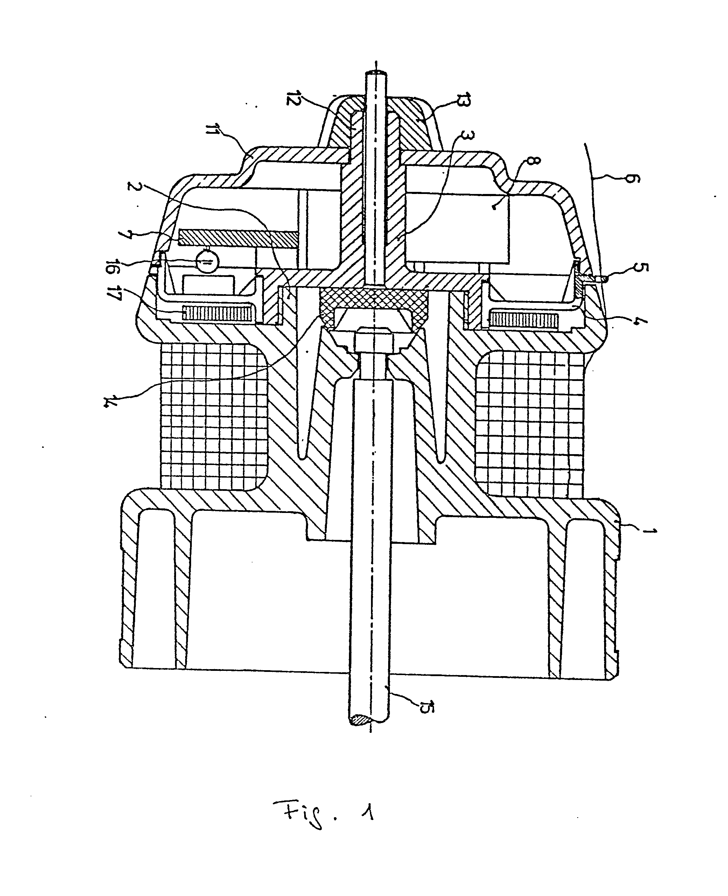

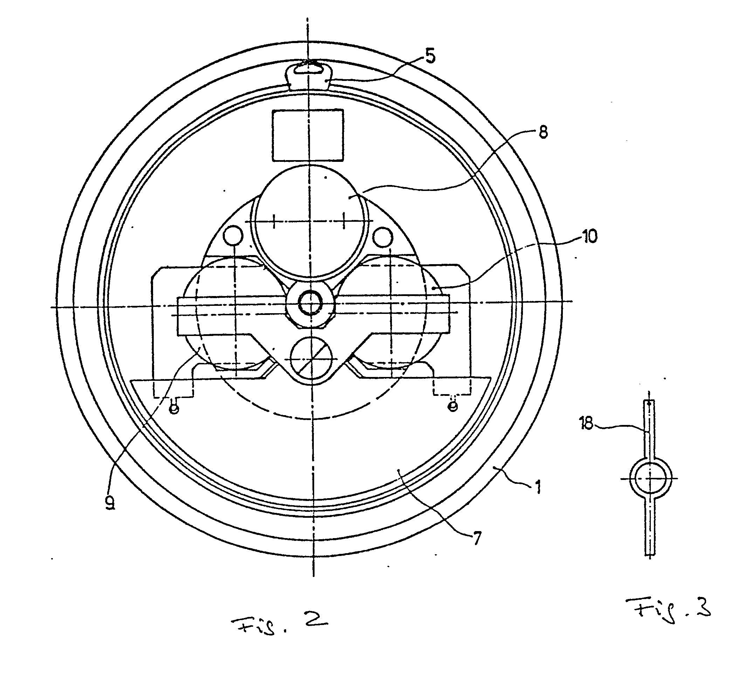

An der Schnurspule 1 befindet sich stirnseitig ein Gewindeflansch 2 auf dem das Gehäuse 3 mit der eingelegten Sensorscheibe 4 aufgeschraubt wird. Die Sensorscheibe weist an einer Stelle die Öse 5 zur Aufnahme der Angelschnur 6 auf. In das Gehäuse 3 werden die elektronische Baugruppe 7 sowie die akustische Signalisiereinrichtung 8 und die Batterien 9/10 eingelegt. Die Schutzkappe 11 wird über den vorderen Gewindezapfen 12 des Gehäuses 3 gesteckt und mit einer Rändelmutter 13 verschlossen.

Das Druckstück 14 wird vor dem Aufschrauben des Gehäuses 3 in dieses eingelegt und dient zur Entriegelung der kompletten Schnurspule von der Rotationsachse 15 der Angelrolle.

### Ansprüche

1. Schnurspule mit elektronischem Bißanzeiger, **dadurch gekennzeichnet,** daß eine um die Achse (15) der Schnurspule (1) drehbar gelagerte Sensorscheibe (4) in die Angelschnur (6) eingehängt ist, welche beim Abziehen der Angelschnur (6) über den vorderen Spulenflansch in Rotation kommt und dabei gleichzeitig eine Feder (17) vorspannt, welche bewirkt, daß sich beim Nachlassen der Zugkraft an der Angelschnur (6) die Sensorscheibe (4) in die entgegengesetzte Richtung dreht und daß durch die Rotation der Sensorscheibe in beliebiger Richtung ein elektronischer Sensor (16) aktiviert und somit Alarm ausgelöst wird.

2. Schnurspule mit elektronischem Bißanzeiger nach Anspruch 1 **dadurch gekennzeichnet,** daß die Öse (5) der Sensorscheibe (4) so ausgebildet ist, daß die Angelschnur (6) beim Anhieb selbsttätig aus der Öse (5) herausschlüpft.

3. Schnurspule mit elektronischem Bißanzeiger nach Anspruch 1 und 2 **dadurch gekennzeichnet,** daß das Gehäuse (3) auf den Spulenflansch (2) aufschraubbar ist.

4. Schnurspule mit elektronischem Bißanzeiger nach Anspruch 1 bis 3 **dadurch gekennzeichnet,** daß das Gehäuse (3) mit einer Schutzkappe (11) verschlossen wird.

5. Schnurspule mit elektronischem Bißanzeiger nach Anspruch 1 bis 4 **dadurch gekennzeichnet,** daß die Sensorscheibe (4) als Flügelrad mit einem oder mehreren Flügeln ausgebildet ist.

Fig. 1

Fig. 2

Fig. 3